# EUROPÄISCHE PATENTANMELDUNG

(11) **EP 4 552 501 A1**
(43) Veröffentlichungstag der Anmeldung: **14.05.2025**
(21) Anmeldenummer: 24200681.5
(22) Anmeldetag: 17.09.2024
(51) Int. Cl.: A21B 3/04

(54) **BACKOFEN MIT EINEM SATTDAMPFERZEUGERMODUL**

(30) Priorität: 10.11.2023 DE 102023131271
(71) Anmelder: Cermak, Adolf, 9450 Altstätten (CH)
(72) Erfinder: Cermak, Adolf, 9450 Altstätten (CH)
(74) Vertreter: Sperling, Thomas

(57) **Zusammenfassung**

Die Erfindung betrifft einen Backofen mit einem Sattdampferzeugermodul (1), welcher **dadurch gekennzeichnet ist, dass** der Backofen eine Backkammer mit einer Wasserdosiervorrichtung (3) aufweist, wobei das Sattdampferzeugermodul (1) eine Heizung (5) und eine damit beheizbare Festkörperstruktur (6) aufweist und in der Backkammer angeordnet ist und die Wasserdosiervorrichtung (3) mit einer Verrieselungseinheit (4) verbindbar ist, welche über der Festkörperstruktur (6) angeordnet ist.

## Beschreibung

Die Erfindung betrifft einen Backofen mit einem Sattdampferzeugermodul.

Gattungsgemäße Backöfen werden mit Vorrichtungen zur Dampferzeugung ausgestattet, um eine Behandlung des Backgutes im Backofen mit Dampf und insbesondere Sattdampf zu ermöglichen. Die Behandlung mit Dampf hat eine ganze Reihe von Vorteilen und somit werden nicht nur professionelle gewerbliche oder Industriebacköfen sondern auch moderne Haushaltsbacköfen mit der Möglichkeit der Dampferzeugung ausgestattet.

Dabei werden Dampferzeuger zur Herstellung einer für den Backprozess gewünscht feuchten Backatmosphäre in verschiedener Bauart eingesetzt.

Im Stand der Technik sind diverse Ausgestaltungen von Dampferzeugern bekannt, die jedoch im Wesentlichen auf ein Konstruktionsprinzip zurückgehen.

Heute übliche Dampferzeuger, wie Sprühsysteme oder Kaskaden, kühlen bei hohem Dampfbedarf oft sehr schnell ab und so kann ein Teil des eingebrachten Wassers nicht mehr verdampfen. Dieses überschüssige Wasser verbleibt dabei häufig in der Backkammer und beeinflusst so die Backatmosphäre, was überwiegend von Nachteil ist. Damit sind gleichbleibende und reproduzierbare Prozesse nicht beziehungsweise nur schwer umsetzbar, so dass die Produktqualität, das Volumen des Gebäcks und die Farbgebung der Bachwaren variieren.

Beispielsweise geht aus der DE 198 12 465 C2 ein Backofen mit einem Dampferzeuger hervor, welcher eine Backkammer mit mindestens einer Verdampfereinrichtung und mindestens einer unabhängig von der Verdampfereinrichtung ausgebildeten Beheizungseinrichtung zur Beheizung der Verdampfereinrichtung ausgestattet ist.

Die Verdampfereinrichtung ist dabei innerhalb der Backkammer angeordnet und von der Beheizungseinrichtung trennbar ausgebildet. Somit ist eine einfache Reinigung der Backkammer möglich, nachdem die Verdampfereinrichtung aus der Backkammer entfernt ist. Die Verdampfereinrichtung ist in der Art eines Reservoirs für das zugeführte Wasser ausgebildet und mit einer Beheizungseinrichtung verbunden. Die Beheizungseinrichtung ist dabei außerhalb der Backkammer an der Backkammerrückwand angeordnet. Die Verdampfung des Wassers erfolgt in dem im Wesentlichen geschlossenen Reservoir, wonach der entstehende Wasserdampf aus dem Reservoire austritt und über Umwälzgebläse in der Backkammer verteilt wird.

Aus der DE 200 03 485 U1 geht ein Backofen mit beheiztem Dampferzeuger hervor, wobei der Backraum einen Dampfgenerator zum Erzeugen von Dampf und Mittel für die Einleitung des von dem Dampfgenerator erzeugten Dampfes in den Backraum umfasst. Weiterhin ist eine Kammer vorgesehen, in der ein bestimmter Wasserstand einstellbar ist und eine Verbrennungskammer, die mit einem Brenner erhitzt wird. Der Dampf wird aus einer Wasseroberfläche verdampfend erzeugt und nachfolgend im Backraum verteilt.

In der US 10 955 142 B2 ist ein Ofen mit einem Dampfgenerator im Inneren des Ofenraumes offenbart, welcher ein Wasserreservoir für das zu verdampfende Wasser aufweist. Ein Heizelement wird dabei in Kontakt mit dem Wasserreservoir gebracht und das Wasser verdampft und verteilt.

Den Ausgestaltungen nach dem Stand der Technik ist der Nachteil zu eigen, dass das Wasser in Behältern beziehungsweise Reservoiren indirekt erwärmt und verdampft wird, wobei der entstehende Dampf in den Backraum gefördert und in diesem verteilt wird.

Bei den indirekten Wärmeübertragungsprozessen mit großen Wärmestromdichten in behälterartigen Verdampfern ist die Entstehung von leicht überhitztem Dampf regelungstechnisch nur schwer zu verhindern. Überhitzter Dampf jedoch ist für eine schonende Behandlung des Backgutes unerwünscht. Es treten eine Reihe nachteiliger Effekte auf, die unbedingt verhindert werden müssen. So entsteht beispielsweise durch den hohen Energieeintrag in kurzer Zeit und die relativ hohen Temperaturen eine unerwünschte Enzyminaktivierung bei den am Garprozess beteiligten Mikroorganismen und Hefen. Weiterhin kann es zu partiellen unerwünschten Aggregationen in den Garprodukten durch diese Effekte kommen.

Die Aufgabe der Erfindung besteht somit darin, einen Backofen mit einem Sattdampferzeugermodul zur Verfügung zu stellen, welches konstruktionsgemäß sicherstellt, dass im Wesentlichen nur Sattdampf erzeugt und unmittelbar im Backofen verteilt wird.

Die Aufgabe der Erfindung wird durch einen Backofen mit einem Sattdampferzeugermodul mit den Merkmalen gemäß Patentanspruch 1 gelöst. Weiterbildungen sind in den abhängigen Patentansprüchen angegeben.

Die Aufgabe der Erfindung wird insbesondere durch einen Backofen mit einem Sattdampferzeugermodul gelöst, welcher dadurch gekennzeichnet ist, dass der Backofen eine Backkammer mit einer Wasserdosiervorrichtung aufweist, wobei das Sattdampferzeugermodul eine Heizung und eine damit beheizbare Festkörperstruktur, bevorzugt in einem Dampferzeugergehäuse, aufweist. Das gesamte Sattdampferzeugermodul ist innerhalb und damit direkt in der Backkammer angeordnet. Dies ist erfindungswesentlich, da die Verdampfung des Wassers unmittelbar in der Backkammeratmosphäre erfolgt. Die Wasserdosiervorrichtung ist mit einer Verrieselungseinheit des Sattdampferzeugermoduls verbindbar. Verbunden ist die Verrieselungseinheit des Sattdampferzeugermoduls mit der Wasserdosiervorrichtung zumindest während der Dampferzeugung. Wird kein Dampf erzeugt, dann die Verbindung getrennt und das Dampferzeugermodul aus dem Backraum, beispielseise zur Reinigungszwecken, entfernt werden.

Die Verrieselungseinheit ist dabei über der Festkörperstuktur angeordnet und verrieselt das zu verdampfende Wasser auf der beheizten Festkörperstruktur. Die beheizte Festkörperstruktur besitzt in Abhängigkeit des Druckes im Backofen eine Temperatur von circa 20 K über der Verdampfungstemperatur des Wassers, wodurch eine geringe Überhitzung sichergestellt ist.

Als Verrieselung ist bevorzugt ein Vertropfen oder ein Versprühen des Wassers zu verstehen.

Die Konzeption der Erfindung besteht nunmehr darin, dass kein behälterartig geschlossener Verdampfer zur Erzeugung des Sattdampfes mit den dargelegten Nachteilen genutzt wird, sondern dass das Sattdampferzeugermodul eine Festkörperstruktur aufweist, auf welcher Wasser verrieselt beziehungsweise versprüht wird und welche über eine Heizung mittels Wärmeleitung und Strahlung erwärmt wird. Der auf der relativ großen Oberfläche der Festkörperstruktur des Sattdampferzeugermoduls entstehende Sattdampf entsteht unmittelbar im Backraum, da das Sattdampferzeugermodul im Backraum angeordnet ist.

Der Backofen ist weiterhin dadurch vorteilhaft ausgestaltet, dass mehrere Heizungen im Sattdampferzeugermodul vorgesehen sind, welche aus zueinander vertikal beabstandeten Heizelementen bestehen. Die Heizelemente durchdringen die Festkörperstruktur und beheizen diese über die Kontaktpunkte mit der Festkörperstruktur und gegebenenfalls über einen Strahlungsanteil. Die Oberfläche der Festkörperstruktur bildet somit eine Verdampfungsfläche für das auf der Festkörperstruktur verrieselte oder aufgesprühte Wasser. Die Verdampfungsflächen für das Wasser und die Quelle für die Dampfentstehung befinden sich somit unmittelbar im Backraum und es sind zur Beförderung des Sattdampfes keine druckerhöhenden Fördereinrichtungen, wie Gebläse mit höherer Leistung, erforderlich.

Bevorzugt ist die Festkörperstruktur aus gut wärmeleitenden Partikeln einer Festkörperschüttung oder aus dreidimensionalen rippenartigen Strukturen ausgebildet. Unter gut wärmeleitenden Partikeln werden Partikel von Festkörpern verstanden, die nicht als typische Isolatoren eingesetzt werden.

Besonders bevorzugt ist die Festkörperstruktur aus Stein, wie Granitteilchen oder aus Metallen, wie Aluminiumteilchen, Kupferteilchen oder aus Mischungen daraus ausgebildet.

Die alternative Ausgestaltung der Festkörperstruktur als rippenartige Strukturen erfolgt vorteilhaft als 3D-gedruckte Rippenstruktur, welche aus Metall oder Kunststoffen oder auch Gemischen daraus herstellbar ist. Mit additiven Verfahren, wie dem 3D-Druck, sind Rippenstrukturen mit großen Oberflächen und strömungsmechanisch vorteilhaften Eigenschaften ausbildbar.

Besonders bevorzugt ist die Wasserzuführung im Backofen als Warmwasserzufuhr ausgebildet, um die im Sattdampferzeugermodul benötigte Wärmeenergie zur Verdampfung des Wassers gering zu halten.

Die Heizung des Sattdampferzeugermoduls ist bevorzugt aus Elektroheizelementen ausgebildet. Die Elektroheizelemente sind dabei besonders bevorzugt als Heizstäbe ausgeformt, zwischen denen die Festkörperstruktur, wie die Festkörperschüttung oder die dreidimensionale Rippenstruktur, angeordnet ist.

Gemäß einer vorteilhaften Ausgestaltung der Erfindung ist das Dampferzeugergehäuse mit einer dampfdurchlässigen Gehäusewand zur Dampfabgabe an die Backkammer ausgebildet. Als dampfdurchlässige Gehäusewand dient bevorzugt eine Gitterstruktur oder eine Netzstruktur.

Um die Backkammer und/oder das Sattdampferzeugermodul optimal reinigen und beispielsweise entkalken zu können, ist das Sattdampferzeugermodul aus der Backkammer entfernbar ausgeführt. Dabei sind die Wasser- und Energieanschlüsse für das Verdampfungswasser und die Heizung als Modulanschlüsse einfach trenn- und verbindbar ausgestaltet.

Die Wasserzuführung ist stationär in der Backkammer ausgeführt und besteht im konstruktiv einfachsten Fall aus einem Ventil mit einem Anschluss für die Verrieselungseinheit.

In besonders vorteilhafter Weise ist der Backofen als Vakuumdampfbackofen ausgeführt. Dabei ist der Backraum evakuierbar ausgebildet und es sind unterschiedliche Druck- und Temperaturniveaus für die Behandlung des Backgutes möglich.

Dies bedeutet, dass bei einem Druck von 200 mbar eine Siedetemperatur des Wassers von 60 °C und eine Temperatur der Heizung von 80 °C eingestellt wird. Bei einem Druckniveau von 73 mbar entspricht die Siedetemperatur des Wassers noch 40 °C und die Temperatur der Heizung etwa 60 °C. Bei 23 mbar liegt die Siedetemperatur des Wassers bei 20 °C und eine Temperatur der Heizung bei entsprechend 40 °C.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- Fig. 1:: schematische Darstellung eines Sattdampferzeugermoduls und
- Fig. 2:: Schnittdarstellung in der Draufsicht eines in einer Backkammerwand integrierten Sattdampferzeugermoduls.

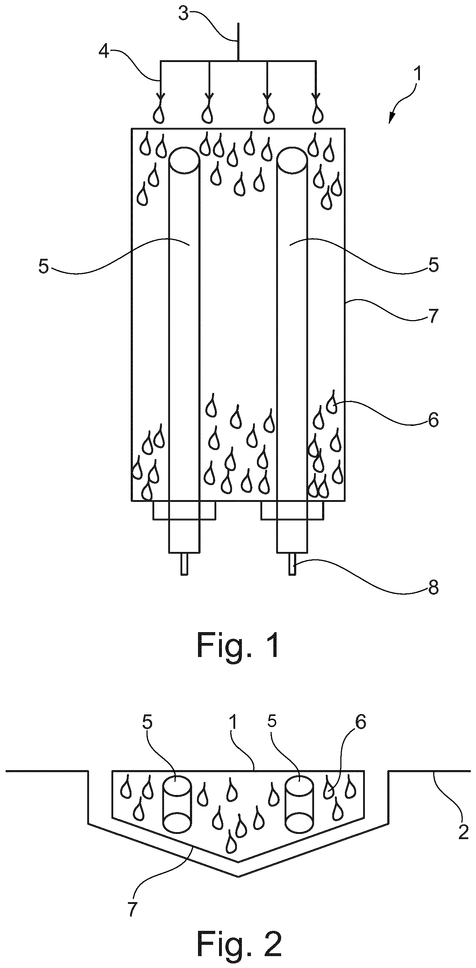

In Figur 1 ist ein Sattdampferzeugermodul 1 eines Backofens und insbesondere eines Vakuumbackofens herausgestellt und schematisch gezeigt. Das Sattdampferzeugermodul 1 besteht im Wesentlichen aus einem Anschluss für eine Wasserzuführung 3, beispielsweise in Form eines Ventils oder Verteilerstranges, sowie einer Verrieselungseinheit 4 für das zu verdampfende Wasser. Weiterhin ist eine Festkörperstruktur 6 in Form einer Festkörperschüttung innerhalb des Sattdampferzeugermoduls 1 vorgesehen. In der dargestellten Ausführungsform ist die Festkörperschüttung aus Partikeln in einem geeigneten Gehäuse, dem Dampferzeugergehäuse 7, angeordnet. Dabei ist in der schematischen Darstellung nicht der gesamte Bereich der Festkörperschüttung dargestellt sondern die Festkörperschüttung ist nur prinziphaft angedeutet. Das Dampferzeugergehäuse 7 ist derart ausgebildet, dass der im Gehäuse entstehende Sattdampf ohne nennenswerten Strömungswiderstand in den Backraum, die Backkammer, entweichen beziehungsweise strömen kann. Realisiert wird dies beispielsweise dadurch, dass das Dampferzeugergehäuse 7 zumindest partiell aus einer netz-, sieb- oder gitterartigen Struktur ausgebildet ist. Im gezeigten Ausführungsbeispiel ist die gitterartige Struktur aus einem Edelstahlgitter ausgeführt.

In alternativen Ausgestaltungen ist die Festkörperschüttung derart ausgebildet, dass die Schüttung formstabil ist und keine äußere Begrenzung aufweist. Die Festkörperpartikel sind dann beispielsweise an den Kontaktpunkten miteinander verbunden durch Verklebung oder Versinterung oder Verpressung.

Die Festkörperstruktur 6 des Sattdampferzeugermoduls 1 wird zur Beheizung in vertikaler Richtung durchdrungen von gleichmäßig beabstandeten Heizungen 5, die im dargestellten Ausführungsbeispiel als Elektroheizstäbe ausgeführt sind. Über die Verrieselungseinheit 4 wird Wasser aus der Wasserzuführung 3 verrieselt. Das Wasser tropft auf die Festkörperstruktur, welche durch die Heizung 5 auf eine Temperatur oberhalb der Verdampfungstemperatur des Wassers bei dem entsprechenden Druck beheizt ist. Die Verrieselungseinheit 4 verbringt das zu verdampfende Wasser auf die Festkörperstruktur. Unter Verbringen ist im Sinne der Erfindung ein Verrieseln, Vertropfen oder auch Versprühen von Wasser zu verstehen.

Beim Auftreffen des Wassers auf die Festkörperstruktur 6 verdampft dieses und nutzt dabei, die große Oberfläche der Festkörperstruktur 6 benetzend, diese Oberfläche als Verdampfungsfläche. Entsprechend ist die Festkörperstruktur 6 dahingehend optimiert, dass sich ein möglichst dünner Wasserfilm ausbildet. Dies ist beispielsweise der Fall durch den Einsatz von Festkörperpartikeln mit hydrophiler Oberfläche. Gute Ergebnisse werden mit dem Einsatz von Partikeln aus Granitgestein erreicht.

Vorteilhaft sind Partikel aus Metallen mit einer sehr guten Wärmeleitung einsetzbar. Es werden Partikel aus Aluminium oder Edelstahl alternativ eingesetzt. Besonders bevorzugt werden Kupferpartikel eingesetzt, da Kupfer zusätzliche erwünschte Effekte hervorruft.

Eine Festkörperstruktur 6 in Form einer Festkörperschüttung weist eine Vielzahl von Partikeln fester Geometrie auf, welche in einer losen Schüttung oder einer geordneten Anordnung einen porösen Festkörper ausbilden. Somit ist die Oberfläche der Festkörperschüttung durch die Oberfläche der Poren, der inneren Oberfläche, festgelegt und beträgt ein Vielfaches der geometrischen Oberfläche des porösen Körpers. Diesen Effekt macht sich die Erfindung zunutze.

In Alternativer Weise wird dieser Effekt der großen Verdampfungsoberfläche zur Minimierung der Überhitzung des entstehenden Dampfes durch Festkörperstrukturen 6 realisiert, die einen Körper aus rippenartigen Strukturen aufweisen. Damit sind Strukturen umfasst, die aus verschiedenen Lagen von Rippen, als Rippenbleche beispielsweise, ausgeführt sind. Die rippenartigen Strukturen sind bevorzugt als geordnete Strukturen aber auch als lose oder Zufallsstrukturen ausgebildet. Gemeinsam ist diesen Strukturen, dass diese eine Festkörperstruktur 6 mit einer Porosität und einer hohen inneren Oberfläche aufweisen.

Das gegebenenfalls bei Wasserüberschuss bei der Wasseraufgabe auf die Festkörperstruktur 6 nicht verdampfte Wasser sammelt sich im unteren Bereich innerhalb des Dampferzeugergehäuses 7 und gelangt zum Wasserablauf 8, durch welchen das überschüssige Wasser aus dem Sattdampferzeugermodul 1 ausgeleitet wird. Gegebenenfalls ist der Wasserablauf 8 mit der Wasserzuführung 3 verbunden, so dass nicht verdampftes Wassers erneut über die Verrieselungseinheit 4 dem Verdampfungsprozess auf der Festkörperstruktur 6 zugeführt wird. Da dies auf einem höheren Temperaturniveau erfolgt kann nicht nur Wasser sondern auch Energie auf diese Weise gespart werden.

In Figur 2 ist das Sattdampferzeugermodul 1 im Schnitt von oben gezeigt und dabei ist die Integration des Sattdampferzeugermoduls 1 in eine Backkammerwand 2 gezeigt. Die Backkammerwand 2 einer nicht näher dargestellten Backkammer umfasst diese im Bereich des Sattdampferzeugermoduls 1, sodass dieses sich bevorzugt geometrisch unauffällig in das Backofeninnere einfügt. Die Geometrie des nutzbaren Volumens der Backkammer wird durch das Sattdampferzeugermodul 1 nicht beeinträchtigt. Das Dampferzeugergehäuse 7 ist zumindest an der Seite zur Backkammer hin aus einem dampfdurchlässigen Material gefertigt, um den in der Festkörperstruktur 6 entstehenden Wasserdampf nach innen an den Backraum abgeben zu können.

Das Sattdampferzeugermodul 1 ist als aus der Backkammer herausnehmbares Modul ausgebildet. Sowohl der Wasseranschluss als auch der Anschluss der Heizung sind über reversible Befestigungselemente in der Art von Schnellkupplungen lösbar und das Modul auf einfache Weise zu beispielsweise Reinigungs- oder Reparaturzwecken aus der Backkammer entnehmbar. Dies ist von großem Vorteil, da eine Reinigung in lebensmitteltechnischen Geräten mit großer Sorgfalt erfolgen muss und hohe Anforderungen an die Qualität der Reinigung gestellt werden. Durch eine externe Reinigung des Sattdampferzeugermoduls 1 kann man diesen Anforderungen auf einfache und spezifische Weise Rechnung tragen und höchste Hygieneansprüche erfüllen.

### Bezugszeichenliste

- 1: Sattdampferzeugermodul
- 2: Backkammerwand
- 3: Wasserzuführung
- 4: Verrieselungseinheit
- 5: Heizung
- 6: Festkörperstruktur
- 7: Dampferzeugergehäuse
- 8: Wasserablauf

## Patentansprüche

1. Backofen mit einem Sattdampferzeugermodul (1), **dadurch gekennzeichnet, dass** der Backofen eine Backkammer mit einer Wasserdosiervorrichtung (3) aufweist, wobei das Sattdampferzeugermodul (1) eine Heizung (5) und eine damit beheizbare Festkörperstruktur (6) aufweist und in der Backkammer angeordnet ist, wobei die Wasserdosiervorrichtung (3) mit einer Verrieselungseinheit (4) verbindbar ist, wobei die Verrieselungseinheit (4) über der Festkörperstruktur (6) angeordnet ist.

2. Backofen nach Anspruch 1, **dadurch gekennzeichnet, dass** die Heizung (5) mehrere zueinander vertikal beabstandete Heizelemente aufweist, welche die Festkörperstruktur (6) durchdringen, wobei die Oberfläche der Festkörperstruktur (6) eine Verdampfungsfläche für das über der Festkörperstruktur (6) verrieselte Wasser ausbildet.

3. Backofen nach Anspruch 1 oder 2, **dadurch gekennzeichnet, dass** die Festkörperstruktur (6) aus gut wärmeleitenden Partikeln einer Festkörperschüttung oder aus dreidimensionalen rippenartigen Strukturen ausgebildet ist.

4. Backofen nach einem der Ansprüche 1 bis 3, **dadurch gekennzeichnet, dass** die Festkörperstruktur (6) als Festkörperschüttung aus Granitteilchen, aus Aluminiumteilchen, aus Kupferteilchen oder Mischungen daraus ausgebildet ist.

5. Backofen nach einem der Ansprüche 1 bis 3, **dadurch gekennzeichnet, dass** die Festkörperstruktur (6) als mit additiven Herstellungsverfahren erzeugte Rippenstruktur ausgebildet ist.

6. Backofen nach einem der Ansprüche 1 bis 5, **dadurch gekennzeichnet, dass** die Wasserzuführung (3) als Warmwasserzuführung ausgebildet ist.

7. Backofen nach einem der Ansprüche 1 bis 6, **dadurch gekennzeichnet, dass** die Heizung (5) aus Elektroheizelementen ausgebildet ist.

8. Backofen nach Anspruch 7, **dadurch gekennzeichnet, dass** die Elektroheizelemente als Heizstäbe ausgebildet sind.

9. Backofen nach einem der Ansprüche 1 bis 8, **dadurch gekennzeichnet, dass** die Festkörperstruktur (6) in einem Dampferzeugergehäuse (7) angeordnet ist und das Dampferzeugergehäuse (7) mit einer dampfdurchlässigen Gehäusewand zur flächigen Dampfabgabe an die Backkammer ausgebildet ist.

10. Backofen nach einem der Ansprüche 1 bis 9, **dadurch gekennzeichnet, dass** das Sattdampferzeugermodul (1) aus der Backkammer entfernbar ausgeführt ist.

11. Backofen nach einem der Ansprüche 1 bis 10, **dadurch gekennzeichnet, dass** die Wasserzuführung (3) stationär in der Backkammer ausgeführt ist.

12. Backofen nach einem der Ansprüche 1 bis 11, **dadurch gekennzeichnet, dass** der Backofen als Vakuumdampfbackofen ausgebildet ist.

13. Verfahren zum Betreiben eines Backofens nach einem der Ansprüche 1 bis 12, **dadurch gekennzeichnet, dass** die Heizung (5) des Sattdampferzeugermoduls (1) derart betrieben wird, dass die Temperatur der Festkörperstruktur (6) 20 K über der Verdampfungstemperatur des Wassers liegt.
